# EUROPÄISCHE PATENTSCHRIFT

(11) **EP 3 308 348 B1**
(45) Veröffentlichungstag und Bekanntmachung des Hinweises auf die Patenterteilung: **04.05.2022**
(21) Anmeldenummer: 16730320.5
(22) Anmeldetag: 10.06.2016
(51) Int. Cl.: G06T 1/00

(54) **VERFAHREN ZUM ERZEUGEN EINES SICHERHEITSELEMENTS MIT VERSTECKT CODIERTER INFORMATION IN EINER GRAFISCHEN ABBILDUNG, SICHERHEITSELEMENT UND VERFAHREN ZUM VERIFIZIEREN**
METHOD FOR PRODUCING A SECURITY ELEMENT WITH SECRETLY CODED INFORMATION IN A GRAPHICAL IMAGE, SECURITY ELEMENT AND METHOD FOR VERIFICATION
PROCÉDÉ DE GÉNÉRATION D'UN ÉLÉMENT DE SÉCURITÉ AYANT UNE INFORMATION CODÉE DE MANIÈRE CACHÉE DANS UNE REPRÉSENTATION GRAPHIQUE, ÉLÉMENT DE SÉCURITÉ ET PROCÉDÉ DE VÉRIFICATION

(30) Priorität: 12.06.2015 DE 102015210868
(43) Veröffentlichungstag der Anmeldung: 18.04.2018
(73) Patentinhaber: Bundesdruckerei GmbH, 10969 Berlin (DE)
(72) Erfinder: KOMAROV, Ilya, 10589 Berlin (DE); DRESSEL, Olaf, 14641 Wustermark (DE)
(74) Vertreter: Patentanwälte Bressel und Partner mbB
(86) Internationale Anmeldenummer: PCT/EP2016/063364
(87) Internationale Veröffentlichungsnummer: WO 2016/198647

(56) Entgegenhaltungen:
- WERNER M. DIETL ET AL: "Key-dependent pyramidal wavelet domains for secure watermark embedding", OPTICAL SENSING II, Bd. 5020, 13. Juni 2003 (2003-06-13), Seiten 728-739, XP055301480, 1000 20th St. Bellingham WA 98225-6705 USA ISSN: 0277-786X, DOI: 10.1117/12.476817 ISBN: 978-1-62841-971-9
- MICHAEL BRACHTL ET AL: "Key-dependency for a wavelet-based blind watermarking algorithm", PROCEEDINGS OF THE MULTIMEDIA AND SECURITY WORKSHOP 2004. MM&SEC'04. MAGDEBURG, GERMANY, SEPT. 20 - 21, 2004; [PROCEEDINGS OF THE MULTIMEDIA AND SECURITY WORKSHOP], NEW YORK, NY : ACM, US, 20. September 2004 (2004-09-20), Seiten 175-179, XP058145164, DOI: 10.1145/1022431.1022462 ISBN: 978-1-58113-854-2
- MEERWALD P ET AL: "WATERMARK SECURITY VIA WAVELET FILTER PARAMETRIZATION", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, Bd. CONF. 8, 7. Oktober 2001 (2001-10-07), Seiten 1027-1030, XP001110298, DOI: 10.1109/ICIP.2001.958301 ISBN: 978-0-7803-6725-8
- Werner Dietl ET AL: "Watermark Security via Secret Wavelet Packet Subband Structures" In: "Correct System Design", 2. Oktober 2003 (2003-10-02), Springer International Publishing, Cham 032548, XP055302250, ISSN: 0302-9743 Bd. 2828, Seiten 214-225, DOI: 10.1007/978-3-540-45184-6_18, Zusammenfassung Seite 215, Absatz 2 - Seite 218, Zeile 3
- HOUNG-JYH M. WANG ET AL: "Watermark design for embedded wavelet image codec", OPTICAL SENSING II, Bd. 3460, 1. Oktober 1998 (1998-10-01), Seiten 388-398, XP055302292, 1000 20th St. Bellingham WA 98225-6705 USA ISSN: 0277-786X, DOI: 10.1117/12.323193 ISBN: 978-1-62841-971-9

## Beschreibung

Die Erfindung betrifft ein Verfahren zum Erzeugen eines Sicherheitselements mit verdeckt codierter Information in einer grafischen Abbildung, ein solches Sicherheitselement sowie ein Verfahren zum Verifizieren eines solchen Sicherheitselements. Insbesondere betrifft die Erfindung ein Verfahren zum Erzeugen eines Sicherheitselements für ein Sicherheitsdokument, ein Sicherheitselement für ein Sicherheitsdokument sowie ein Verfahren zum Verifizieren eines mit einem solchen Sicherheitselement ausgebildeten Sicherheitsdokuments.

Aus dem Stand der Technik ist es bekannt, dass sogenannte Sicherheitsdokumente, welche beispielsweise Identifikationskarten, Personalausweise, Reisepässe, Führerscheine, aber auch Wertdokumente wie Banknoten, über Sicherheitselemente abgesicherte Eintrittskarten und Sicherheitsetiketten usw. umfassen, mit Sicherheitselementen auszustatten, die für eine Verifizierung einer Echtheit des Sicherheitsdokuments eingesetzt werden können. Als Sicherheitselement wird somit jene körperliche Einheit oder jener körperliche Gegenstand bezeichnet, welche oder welcher ein Sicherheitsmerkmal aufweist. Als Sicherheitsmerkmal wird ein Merkmal bezeichnet, welches für eine Prüfung der Authentizität oder Echtheit einer körperlichen Einheit oder eines körperlichen Gegenstands eingesetzt werden kann.

Eine Gruppe von Sicherheitsmerkmalen und Sicherheitselementen sind dafür ausgebildet, dass diese über eine optische Erfassung einer grafischen Abbildung ausgewertet werden können. Beispielsweise kann dieses über eine Sichtprüfung durch eine Person erfolgen. Ebenso kann eine solche Prüfung über eine Erfassung einer Abbildung, beispielsweise mittels einer Kamera, und eine anschließende maschinelle oder maschinell unterstützte Auswertung erfolgen.

Bei einer Untergruppe von Sicherheitselementen wird die Sicherheit gegenüber Nachahmungen und Verfälschungen des entsprechenden Sicherheitselements dadurch sichergestellt, dass in dem Sicherheitselement eine Information codiert wird. Eine Überprüfung, ob diese Information in dem Sicherheitselement gespeichert ist und/oder ob die gespeicherte Information unverändert ist, kann dann zum Verifizieren des entsprechenden Sicherheitselements genutzt werden. Besonders bevorzugt werden Sicherheitselemente verwendet, bei denen die gespeicherte Information bei einer einfachen Betrachtung oder maschinellen Erfassung der grafischen Abbildung nicht ohne weiteres erkennbar ist. Dies bedeutet, dass beispielsweise eine auf die erfasste Abbildung angewendete Mustererkennung die versteckte codierte Information nicht erfassen und entnehmen kann. Vorzugsweise kann nicht einmal festgestellt werden, ob in der erfassten Abbildung eine versteckt codierte Information enthalten ist oder nicht.

Als Mustererkennung wird eine Erkennung von Formen und/oder Konturen in einer bildlichen Darstellung verstanden.

Ein aus dem Stand der Technik bekanntes Verfahren, welches geeignet ist, verdeckt Informationen in eine Abbildung zu codieren, ist beispielsweise in der US 6,359,998 B1 beschrieben. Dort ist ein sogenanntes digitales Watermarking, d.h. das Versehen einer Abbildung mit einem digitalen Wasserzeichen, beschrieben. Hierzu werden Transformationstechniken zum Einfügen eines nicht wahrnehmbaren digitalen Wasserzeichens in digitale Daten beschrieben, welches gegenüber einer nicht autorisierten Erkennung und Detektion geschützt ist. Das dort beschriebene Verfahren soll ausreichend robust sein, um auch eine verlustbehaftete Komprimierung und andere Bildbearbeitungsverfahren, wie beispielsweise eine Änderung der Skalierung "zu überstehen". Dies bedeutet, dass das digitale Wasserzeichen zumindest teilweise in den digitalen Daten erhalten bleibt. Das Einfügen des Wasserzeichens basiert auf der Anwendung von Wavelet-Zerlegungstransformationen. In die hierbei erzeugten Frequenzbänder oder hiermit korrespondierenden Unterabbildungen werden die verdeckt zu codierenden Daten eingebracht und anschließend Wavelet-Rücktransformationen ausgeführt, welche die Zerlegungstransformationen "rückgängig" machen und eine zumindest auf den ersten Blick ununterscheidbare Abbildung mit den verdeckt codierten Informationen erzeugen.

Wenn hier davon gesprochen wird, dass eine Abbildung nicht von einer anderen Abbildung unterschieden werden kann, so ist hiermit immer gemeint, dass deren bildliche Ausgestaltungen, das heißt die abbildend erfassbaren Repräsentationen für einen Betrachter nicht unterscheidbar sind, ohne eine aufwendige Datenanalyse der erfassen Abbildungsdaten auszuführen. Der optische Eindruck für einen menschlichen Betrachter unterscheidet sich somit nicht.

Mit dem Einbetten eines Wasserzeichens in eine Abbildung beschäftigen sich auch: Werner M. Dietl et al. in "Key-dependent pyramidal wavelet domains for secure watermark embedding", OPTICAL SENSING II, 1000 20th St. Bellingham WA 98225-6705 USA, (20030613), vol. 5020, doi:10.1117/12.476817, ISSN 0277-786X, ISBN 978-1-62841-971-9, Seiten 728 - 739; Michael Brachtl et al.in "Key-dependency for a wavelet-based blind watermarking algorithm", PROCEEDINGS OF THE MULTIMEDIA AND SECURITY WORKSHOP 2004. MM&SEC'04. Magdeburg, Deutschland, 20 - 21 September, 2004; [PROCEEDINGS OF THE MULTIMEDIA AND SECURITY WORKSHOP], New York, NY : ACM, US, (20040920), doi:10.1145/1022431.1022462, ISBN 978-1-58113-854-2, Seiten 175 - 179; P. Meerwald et al. in "WATERMARK SECURITY VIA WAVELET FILTER PARAMETRIZATION", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, New York, NY, (20011007), vol. CONF. 8, doi:10.1109/ICIP.2001.958301, ISBN 978-0-7803-6725-8, Seiten 1027 - 1030; und Werner Dietl et al. in "Watermark Security via Secret Wavelet Packet Subband Structures", Correct System Design, Cham, Springer International Publishing, vol. 2828, Seiten 214 - 225, doi:10.1007/978-3-540-45184-6_18, ISSN 0302-9743.

Auch die US 7,343,025 B2 beschreibt ein solches Verfahren zum Einbetten und Extrahieren digitaler Wasserzeichen. Bei dem in der US 7,343,025 B2 beschriebenen Verfahren wird das Wasserzeichen in das Subband bzw. die damit korrespondierende Unterabbildung eingefügt, die die niederfrequentesten Komponenten der Zerlegung in Subbänder bzw. Unterabbildungen enthält. Auch bei diesem Verfahren werden nach dem Einfügen der Information die entsprechenden Rücktransformationen ausgeführt, um eine Abbildung zu erhalten, die mit der ursprünglichen Abbildung korrespondiert und auf den ersten Blick von dieser nicht unterscheidbar ist, jedoch verdeckt die codierte Information enthält.

Dieses beschriebene Verfahren ist zwar geeignet, verdeckt Informationen zu codieren, jedoch lässt sich die verdeckt codierte Information auf einfache Weise in dem Dokument finden, sofern eine Wavelet-Transformation an diesem Dokument ausgeführt wird.

Der Erfindung liegt die Aufgabe zugrunde, ein Verfahren anzugeben, mit dem ein schwieriger zu fälschendes Sicherheitselement geschaffen wird, ein solches Sicherheitselement bereitzustellen sowie ein Verfahren zu dessen Verifikation bereitzustellen, sodass dieses Sicherheitselement zur Absicherung von Sicherheitsdokumenten hinsichtlich der Echtheit eingesetzt werden kann.

Die Erfindung wird durch ein Verfahren zum Herstellen eines Sicherheitselements mit den Merkmalen des Patentanspruchs 1 ein Sicherheitselement mit den Merkmalen des Patentanspruchs 6 sowie ein Verifikationsverfahren mit den Merkmalen des Patentanspruchs 7 gelöst. Vorteilhafte Ausführungsformen der Erfindung ergeben sich aus den Unteransprüchen.

### Grundidee der Erfindung

Die Information, welche über ein digitales Wasserzeichen nach den Verfahren aus dem Stand der Technik eingefügt wird, kann auf einfache Weise aufgefunden werden, indem eine gewöhnliche Wavelet-Zerlegung der erfassten Abbildung oder einer Ursprungsabbildung vorgenommen wird. Im Stand der Technik ist es üblich, diese Zerlegung mit einem von mehreren bekannten Wavelets durchzuführen. Hierbei werden jedoch alle Wavelet-Transformationsschritte auf Basis ein und desselben Wavelets ausgeführt. Die Transformationsfunktionen werden für die einzelnen sukzessive auszuführenden Zerlegungsschritte, angepasst an die sich ändernde Anzahl von Bildelementen bei jedem nachfolgenden Zerlegungsschritt, aus dem Wavelet abgeleitet.

Der Erfindung liegt nun der Gedanke zugrunde, mindestens einen der Zerlegungsschritte auf Basis eines zweiten Wavelets auszuführen, welches von dem ersten Wavelet verschieden ist. Allein aufgrund der Tatsache, dass ein zweites Wavelet bei einem der Zerlegungsschritte neben der Verwendung des ersten Wavelets in anderen Zerlegungsschritten angewendet wird, ist es bei einer einfachen Waveletzerlegung, welche auf Basis nur eines Wavelets ausgeführt wird, unmöglich, die codierte Information in einer der Unterabbildungen, die mit einem der erzeugten Frequenzbänder korrespondiert, in einer entnehmbaren Weise aufzufinden. In der Regel ist es ohne eine Kenntnis der beiden verwendeten Wavelets nicht einmal möglich festzustellen, dass eine Information in der Abbildung codiert ist.

Diese so erzeugte codierte Abbildung wird in ein physisch ausgebildetes Sicherheitselement, z. B. als eine gedruckte Abbildung, ein Hologramm, beispielsweise ein Volumenreflexionshologramm eines homogenen Streukörpers, dessen Pixel mit unterschiedlicher Beugungseffizienz kopiert oder einbelichtet sind, wobei die Beugungseffizienz eine Helligkeitskodierung oder eine Graustufencodierung ähnlich eines Graustufenbilds bei digitalen Druckverfahren darstellt, gespeichert. Durch das Verfahren entsteht eine Repräsentation der codierten Abbildung, in der die Information so codiert ist, dass ein menschlicher Betrachter die codierte Information nicht erfassen kann. Bei einem Vergleich der ursprünglichen Abbildung und der codierten Abbildung kann in der Regel weder die codierte Information entnommen noch die Tatsache erkannt werden, dass die Information in der codierten Abbildung enthalten ist. Dieses kann ein Betrachter oder eine Verifizierungsvorrichtung nur feststellen, wenn die erhaltene codierte Abbildung digital erfasst wird und entsprechende Wavelet-Transformationen mit jenen Wavelets ausführt, die im Verfahren bei der ursprünglichen Codierung verwendet wurden.

Ein Sicherheitsdokument mit einer grafischen Repräsentation der codierten Abbildung beispielsweise in Form eines Aufdrucks, oder in Form einer über Materialverfärbungen in Abstufungen gebildeten Lasermarkierung oder in Form eines mittels der codierten Abbildung individualisierten Volumenreflexionshologramms einer Streuscheibe, weist somit ein körperlich ausgebildetes nach dem Verfahren hergestelltes Sicherheitselement auf, welches die oben genannten Vorteile aufweist, nämlich unter anderem, dass eine verdeckte Information in dem Sicherheitselement gespeichert ist, die für den Betrachter nicht erkennbar ist und sogar gegen ein unbefugtes Auslesen geschützt ist und dennoch zuverlässig bei Kenntnis der korrekten Wavelets hinsichtlich ihres Inhalts ausgewertet und überprüft werden kann.

Als abbildend erfassbare Repräsentation einer Abbildung wird die Ausgestaltung der Abbildung bezeichnet, die beispielsweise von einem menschlichen Betrachter mit seinem Sehsinn zumindest bei geeigneten Umweltbedingungen erfassbar ist. Eine abbildend erfassbare Repräsentation wird auch als grafische Abbildung oder bildlich erfassbare Abbildung bezeichnet. Eine solche kann beispielsweise eine gedruckte oder andersartig in ein Dokument gespeicherte Abbildung sein. Eine abbildend erfassbare Abbildung ist mittels einer abbilden Vorrichtung (beispielsweise einer Kamera) optisch erfassbar. Auch ein Hologramm, für dessen Erfassbarkeit eine geeignete Beleuchtung und eine geeignete Betrachtungs- oder Abbildungsrichtung zu wählen ist, stellt eine abbildend erfassbare Repräsentation einer Abbildung dar. Die grafische Repräsentation einer Abbildung wird auch verkürzt als abbildend erfassbare Abbildung bezeichnet. Die Worte "abbildend erfassbar" drücken jeweils aus, dass es sich nicht um einen digitalen Datensatz, sondern eine bildliche Darstellung oder Speicherung einer beschriebenen Abbildung handelt.

Als Erfassen einer Abbildung wird das abbildende Erfassen der abbildend erfassbaren Abbildung, beispielsweise mittels einer Digitalkamera, verstanden. Die erfasste Abbildung (auch kurz Abbildung genannt) ist dann der digitale Datensatz, der beim Erfassen erstellt wird.

Auch die abbildend erfassbare Abbildung wird manchmal verkürzt als Abbildung bezeichnet. Im Rahmen dieser Beschreibung sollte es sich jeweils aus dem Kontext erschließen lassen, ob ein digitaler Datensatz oder dessen bildliche Repräsentation gemeint ist. Das Sicherheitselement welches herstellt oder verifiziert wird, weist jeweils eine abbildend erfassbare Repräsentation der Abbildung auf. Die für die Abbildung, an der die Waveletzerlegungen ausgeführt wird, ist digitalisiert. Aus dieser Abbildung lässt sich beispielsweise über ein Druckverfahren eine abbildend erfassbar Repräsentation der Abbildung in einem Sicherheitselement erzeugen. Die mit dem Begriff Abbildung in seinen unterschiedlichen Bedeutungen bezeichneten Dinge, die abbildend erfassbare Repräsentation und der digitale Datensatz, korrespondieren miteinander und sind ineinander überführbar.

### Bevorzugte Ausführungsformen

Insbesondere wird ein Verfahren zum Erzeugen eines Sicherheitselements mit versteckt codierter Information in einer grafischen Abbildung geschaffen, welches die Schritte umfasst: Bereitstellen einer grafischen zweidimensionalen Abbildung; Bereitstellen der zu codierenden Information; Ausführen von Wavelet-Zerlegungstransformationen, um die Abbildung sukzessive in mit Frequenzbändern korrespondierende Unterabbildungen zu zerlegen; wobei die Unterabbildungen aus den Transformationskoeffizienten abgeleitet werden; Verändern einzelner Transformationskoeffizienten einer ausgewählten der Unterabbildungen, um die zu codierende Information in die eine ausgewählte Unterabbildung einzufügen; Ausführen von Wavelet-Rücktransformationen, um eine mit der bereitgestellten grafischen Abbildung korrespondierende codierte Abbildung zu erhalten, in der die erste Information verdeckt gespeichert ist, wobei beim sukzessiven Ausführen der Wavelet-Zerlegungstransformationen, die zum Erzeugen der einen Unterabbildung, in die die Information eingefügt wird, neben Wavelet-Zerlegungstransformationen mit einem ersten Wavelet mindestens eine Wavelet-Zerlegungstransformation mit einem von dem ersten Wavelet verschiedenen zweiten Wavelet ausgeführt wird. Nur bei Kenntnis beider Wavelets besteht eine Möglichkeit, die codierte Information aus der Abbildung des Sicherheitselements wieder zu entnehmen. Mit dem Bereitstellen einer grafischen Abbildung ist hier das Bereitstellen einer digitalen Repräsentation der Abbildung gemeint. Die dem hier beschriebenen Verfahren hergestellt Abbildung mit der verdeckt codierten Information wird dann grafisch ausgegeben, beispielsweise auf ein Sicherheitsdokument als Sicherheitselement gedruckt, in ein personalisiertes Hologramm als "Graustufenbild" gespeichert und in das Sicherheitsdokument eingebracht oder auf andere Weise gespeichert, sodass die codierte Abbildung optisch erfasst werden kann.

Erfindungsgemäß wird eine weitere Information bei einer bevorzugten Ausführungsform über eine Auswahl der ausgezeichneten Unterabbildung zum Einfügen der ersten Information aus der Gruppe der über die sukzessive Wavelet-Zerlegungstransformationen erzeugbaren oder erzeugten Unterabbildungen codiert. Selbst wenn beispielsweise bekannt ist, dass die erste Information codiert wird, indem zunächst eine vollständige Wavelet-Zerlegung entlang zweier orthogonaler Raumrichtungen mit einem ersten Wavelet ausgeführt wird und anschließend in einer der so erzeugten Unterabbildungen eine Wavelet-Transformation auf Basis des zweiten Wavelets ausgeführt wird und in eine der hierbei entstehenden Unterabbildungen die erste Information eingefügt ist, wird hierüber nur eine Anzahl von möglichen Unterabbildungen spezifiziert, in der die erste Information codiert sein kann. Somit ist über eine Auswahl einer der Unterabbildungen eine weitere Information zusätzlich zu der ersten Information quasi über den Ort der Unterabbildung in dem Zerlegungsschema gespeichert.

Hierdurch wird ein Sicherheitselement mit einer verdeckt codierten ersten Information geschaffen, welches eine abbildend erfassbare Abbildung umfasst, in welche eine erste Information codiert ist, indem eine Ursprungsabbildung mittels Wavelet-Zerlegungstransformationen sukzessive in Unterabbildungen zerlegt ist, eine der erzeugten Unterabbildungen modifiziert ist, indem in die eine der Unterabbildungen die erste Information eingefügt ist, und über Wavelet-Rücktransformationen anhand der einen modifizierten Unterabbildung und den übrigen bei der Zerlegung erzeugten Unterabbildungen die eine Abbildung zusammengefügt ist, in der die erste Information verdeckt codiert ist und anhand derer die abbildend erfassbare Abbildung ausgebildet ist, wobei beim sukzessiven Ausführen der Wavelet-Zerlegungstransformationen, die zum Erzeugen der einen Unterabbildung, in die die Information eingefügt ist, neben Wavelet-Zerlegungstransformationen mit einem ersten Wavelet mindestens eine Wavelet-Zerlegungstransformation mit einem von dem ersten Wavelet verschiedenen zweiten Wavelet ausgeführt ist.

Ferner wird ein Verifikationsverfahren eines Sicherheitselements mit einer abbildend erfassbaren Abbildung zum Prüfen auf eine Entnehmbarkeit einer in der abbildend erfassbaren Abbildung verdeckt codierten Information vorgeschlagen, welches die Schritte umfasst: Erfassen der Abbildung; Bereitstellen eines ersten Wavelets; Ausführen von Wavelet-Zerlegungstransformationen zum sukzessiven Erzeugen von zu Frequenzbändern korrespondierenden Unterabbildungen; Auswerten mindestens einer Unterabbildung daraufhin, ob dieser eine erste codierte Information zu entnehmen ist, und Ausgeben einer Verifikationsentscheidung abhängig davon, ob die erste codierte Information zu entnehmen ist oder nicht, wobei zusätzlich ein zweites Wavelet bereitgestellt wird und mindestens eine Wavelet-Zerlegungstransformation zum Erzeugen der Unterabbildung für die Auswertung auf die Entnehmbarkeit der ersten codierten Information mit dem zweiten Wavelet ausgeführt wird.

Bei dem erfindungsgemäßen Verifikationsverfahren ist entsprechend vorgesehen, dass mehrere bei der Zerlegung der Abbildung erzeugte Unterabbildungen auf die Entnehmbarkeit der ersten codierten Information hin ausgewertet werden und eine zweite Information aus der Identifikation der Unterabbildung abgeleitet und ausgegeben wird, für die die Entnehmbarkeit der ersten codierten Information festgestellt wird. Alternativ ist es möglich, zusätzlich zu dem zweiten Wavelet die ausgewählte Unterabbildung aus der Menge der möglichen über die Wavelet-Zerlegungstransformation erzeugbaren Unterabbildungen zu spezifizieren, welche für die Auswertung hinsichtlich der Entnehmbarkeit der ersten Information auszuwerten ist.

Insgesamt werden somit zum Codieren der Information Wavelet-Zerlegungstransformationen sowohl mit einem ersten Wavelet als auch mindestens eine Wavelet-Zerlegungstransformation mit einem zweiten Wavelet ausgeführt wird. Auch hier wird unter dem Erfassen der Abbildung das Erfassen einer digitalen Repräsentation der Abbildung verstanden, welche mittels einer digitalen Kamera, eines Scanners oder auf andere Weise von der grafischen Darstellung eines Sicherheitsdokuments erfasst sein kann. Der Vorteil der Erfindung liegt darin, dass die codierte Information ohne eine Kenntnis der beiden Wavelet-Transformationen, die beim Codieren verwendet wurden, der Abbildung nicht entnommen werden kann.

Bei einer Wavelet-Zerlegungstransformation entstehen in der Regel Transformationskoeffizienten, die einem hochfrequenten Frequenzband zuordenbar sind, und Transformationskoeffizienten, die einem niederfrequenten Frequenzband zuordenbar sind. Somit ist es üblich, aus den Transformationskoeffizienten, die dem hochfrequenten Frequenzband zuzuordnen sind, eine Unterabbildung abzuleiten und entsprechend aus den Transformationskoeffizienten, die dem niederfrequenten Frequenzband zuzuordnen sind, entsprechend eine weitere Unterabbildung abzuleiten. Bei einer Wavelet-Transformation entstehen somit üblicherweise jeweils zwei Unterabbildungen, von denen eine dem hochfrequenten Frequenzband und eine dem niederfrequenten Frequenzband zuzuordnen ist.

Eine solche Zerlegung wird in der Regel bezogen auf eine Raumrichtung im Abbildungsraum der Abbildung vorgenommen. Eine solche Richtung im Abbildungsraum kann beispielsweise mit den Zeilen korrespondieren, eine senkrecht hierzu orientierte Raumrichtung beispielsweise mit den Spalten der Bildpunkte einer pixelierten digitalen Abbildung. Bei einer sukzessiven Zerlegung einer Abbildung bezogen auf eine solche Richtung im Abbildungsraum, ist es üblich, jeweils die dem niederfrequenten Frequenzband zuordenbare Unterabbildung sukzessive weiter bezüglich derselben Raumrichtung zu zerlegen. Darüber hinaus ist es üblich, auch Zerlegungsschritte zu kombinieren, die entlang unterschiedlicher Raumrichtungen im Abbildungsraum ausgeführt werden. Üblicherweise werden die Transformationen entlang zueinander orthogonaler Richtungen im Abbildungsraum ausgeführt. Beispielsweise zum einen bezogen auf eine horizontale Richtung (Zeilenrichtung der Bildpunkte) und bezogen auf eine vertikale Richtung (Spaltenrichtung der Bildpunkte). Eine klassische Zerlegungsstruktur einer Abbildung sieht vor, dass zunächst eine Wavelet-Transformation bezogen auf die Zeilen der Abbildung vorgenommen wird, sodass man eine niederenergetische Unterabbildung und eine hochenergetische Unterabbildung bezogen auf eine horizontal ausgerichtete Wavelet-Zerlegung erhält. Die so erhaltenen Unterabbildungen werden dann anschließend jeweils einer vertikalen Wavelet-Zerlegung, d.h. entlang der Spalten, unterzogen. Die Unterabbildungen sind durch die entsprechenden Transformationskoeffizienten gebildet. Für eine grafische Darstellung ist es üblich, die Transformationskoeffizienten in Graustufenwerte oder Farbwerte umzurechnen, um beispielsweise eine möglichst kontrastreiche Darstellung zu erhalten. Unabhängig von dieser Einreichungsvorschrift werden für die weiteren Transformationszerlegungen und/oder Rücktransformationen jeweils Transformationskoeffizienten verwendet, die den Bildpunkten zugeordnet sind, die für eine grafische Darstellung verwendet sind.

Insgesamt erhält man so bei einer Zerlegung in zwei Raumrichtungen der Abbildung in jeder Zerlegungsstufe vier Unterabbildungen, von denen eine einer weiteren Zerlegung in der nächsten Stufe unterzogen wird. Im Folgenden werden Wavelet-Transformationszerlegungen, welche entlang einer horizontalen Abbildungsrichtung (Zeile) des Bilds ausgeführt werden, über den Buchstaben h gekennzeichnet, Wavelet-Transformationszerlegungen entlang einer Spaltenrichtung hingegen mit dem Buchstaben v. Die aus den dem niederfrequenten Frequenzband zuzuordnenden Transformationskoeffizienten abgeleiteten Unterabbildungen werden mit einem Kleinbuchstaben und die aus den mit dem hochfrequenten Frequenzband assoziierten Transformationskoeffizienten abgeleiteten Unterabbildungen mit Großbuchstaben gekennzeichnet. Ein tiefergestellter Index kennzeichnet das jeweils verwendete Wavelet, wobei Wavelets zur Unterscheidung lateinische Buchstaben, außer den Buchstaben v und h, zugeordnet sind. Die Abfolge der Zerlegungen ist über die Reihenfolge der hintereinander gefügten, die einzelnen Zerlegungsrichtungen und Frequenzbandzuordnungen sowie die verwendeten Wavelets andeutenden Buchstaben festgelegt. Hierbei ist die linksstehend angegebene Zerlegung die zuerst ausgeführte und die rechtsstehend angedeutete Zerlegung die zuletzt ausgeführte Zerlegung. Zur Verkürzung der Schreibweise bei mehrstufigen Zerlegungen sind in Abbildungen einige Zerlegungsschritte durch Auslassungspunkte "..." gekennzeichnet. Zusätzlich sind dann als "Legende" die ausgelassenen Zerlegungsschritte in einer Notation der Form "...≙ ZERLEGUNGSSCHRITTE" angegeben. Werden beispielsweise die Zerlegungsschritte hₐvₐ durch die Auslassungspunkte "..." repräsentiert, lautet die Legende "...≙ hₐvₐ".

Als besonders vorteilhaft für die Sicherheit hat es sich erwiesen, beim Erzeugen der ausgewählten Unterabbildung, in der die Information codiert wird, mindestens eine der sukzessive ausgeführten Wavelet-Zerlegungstransformationen an einer Unterabbildung auszuführen, die mit dem hochfrequenten Frequenzband der zur ausgeführten Wavelet-Zerlegungstransformation korrespondiert. In der oben beschriebenen Notation ist dies gleichbedeutend damit, dass in der der Kennzeichnung der Unterabbildung, die den Zerlegungspfad für die entsprechende Unterabbildung angibt, in die die erste Information eingefügt ist, mindestens ein Großbuchstabe zur Kennzeichnung der aus der Transformation stammenden Transformationskoeffizienten auftritt.

Um ein Aufspüren und Auffinden der codierten ersten Information ohne Kenntnis der beiden korrekten Wavelets zu erschweren, ist bei einer Ausführungsform vorgesehen, dass bei der sukzessiven Zerlegung der Abbildung in die ausgewählte Unterabbildung mindestens eine Unterabbildung mittels einer Wavelet-Zerlegungstransformation unter Verwendung des zweiten Wavelets zerlegt wird, an der bei einer in zwei Richtungen des Abbildungsraums ausgeführten Wavelet-Zerlegung unter jeweiliger Verwendung des ersten Wavelets keine weitere Zerlegung vorgenommen würde. Zunächst wird somit eine übliche Zerlegung entlang zweier orthogonaler Richtungen des Abbildungsraums mittels eines ersten Wavelets vorgenommen. In eine der Unterabbildungen, die hierbei entstehen, wird anschließend die erste Information nach Anwendung mindestens einer Wavelet-Zerlegungstransformation, die mit dem zweiten Wavelet ausgeführt wird, codiert. Zur Erzeugung der entsprechenden Unterabbildung können erneut ein oder mehrere Zerlegungsschritte entlang einer oder zwei Raumrichtungen vorgenommen werden. In eine der so erstellten Unterabbildungen wird dann die erste Information eingefügt. Anschließend werden entsprechend des Zerlegungspfads, der zu dieser Unterabbildung geführt hat, die entsprechenden Rücktransformationen ausgeführt. Gemäß der hier beschriebenen Zerlegung somit zunächst Rücktransformationen, die mit dem zweiten Wavelet korrespondieren, und anschließend jene, die mit dem ersten Wavelet korrespondieren.

In manchen Situationen sind mögliche Fälscher daran interessiert, zunächst einmal herauszufinden, ob in einer Abbildung eines Sicherheitselements überhaupt eine verdeckte Information codiert ist. Hierzu werden häufig statistische Verfahren an der Abbildung oder an Unterabbildungen, die mittels einer Wavelet-Transformationszerlegung erzeugt sind, ausgeführt werden. Um die grundsätzliche Auffindbarkeit der gespeicherten Information zu erschweren, ist bei einer Ausführungsform vorgesehen, dass die codierte Information so ausgewählt wird, dass diese dem Frequenzband, mit dem die Unterabbildung korrespondiert, in die die erste Information eingefügt wird, keine spektrale Energie zugeführt wird.

Vorzugsweise wird nur eine Information mit einem Informationsgehalt eingefügt, der klein gegenüber dem Informationsgehalt der Unterabbildung ist, in die die Informationen eingefügt sind. So wird der Unterabbildung beispielsweise, anders als im Stand der Technik, kein Rauschsignal überlagert. Es werden vorzugsweise vielmehr nur einzelne Transformationskoeffizienten angepasst.

Das zweite Wavelet, d.h. die zweite Wavelet-Funktion, wird vorzugsweise so ausgewählt, dass dessen bzw. deren spektrale Energie möglichst nah an spektrale Energie des ersten Wavelets, d.h. der ersten Wavelet-Funktion, liegt.

Die unautorisierte Detektion der gespeicherten Information wird noch weiter bei einer Ausführungsform erschwert, bei der neben dem ersten Wavelet das zweite Wavelet aus einer Gruppe von verschiedenen Wavelets ausgewählt wird. Ebenso ist es möglich, die beiden Wavelets, d.h. das erste und das zweite Wavelet, aus einer Gruppe verschiedener Wavelets auszuwählen.

Für eine zusätzliche Informationscodierung oder auch nur Erschwernis der unautorisierten Entnahme der Information wird bei einer weiteren Ausführungsform dadurch herbeigeführt, dass die Zerlegungsstruktur, welche eine Abfolge der zur Ableitung der einen Unterabbildung, in welche die erste Information codiert wird, verwendeten Wavelettransformationsschritte angibt, anhand einer dritten Information oder anhand der ersten Information ausgewählt wird. So kann beispielsweise über den Inhalt der Information festgelegt werden, wie die Zerlegungsstruktur der Ursprungsabbildung aussieht, um die Unterabbildung zu erzeugen, in die die Information dann codiert wird. Hierdurch ist eine Verschränkung der ersten Information mit dem Verfahren zum Codieren herbeigeführt. Die entnommene Information kann dann anschließend darauf geprüft werden, ob das Zerlegungsschema der Unterabbildung, aus der die Information entnommen wurde, mit der Unterabbildung übereinstimmt, die sich aus der Information ergibt. Unter Verwendung einer sogenannten Streuwertfunktion ist es möglich, aus einer zu codierenden Information die Zerlegungsstruktur für die Unterabbildung eindeutig zu ermitteln, in die die entsprechende Information zu codieren ist. Aus der so errechneten Zerlegungsstruktur oder dem errechneten Zerlegungspfad kann in der Regel jedoch nicht eindeutig auf die erste Information zurückgeschlossen werden, sodass für eine gefälschte Information selbst bei Kenntnis der beiden verwendeten Wavelet-Transformationen und der Rücktransformationen eine Codierung der gefälschten Informationen in das Sicherheitsdokument nicht möglich ist, ohne auch die entsprechende Streuwertfunktion für die Ermittlung des zugehörigen Zerlegungspfads zu kennen. Diese Streuwertfunktion muss durch den Aussteller der Sicherheitselemente jedoch nicht bekannt gegeben werden, um eine Verifikation in der Weise zu ermöglichen, dass eine autorisierte Instanz, der die zum Decodieren benötigten Wavelet-Transformationen bereitgestellt werden, eine Zerlegung in der Weise vornehmen kann, dass die Information zu Verifikationszwecken entnehmbar ist.

Ist beispielsweise die Zerlegungsstruktur von der gespeicherten Information abhängig, so ist es vorteilhaft, das Verifikationsverfahren so auszuführen, dass unterschiedliche Zerlegungsschemata mittels der Wavelet-Transformationen ausgeführt werden und unterschiedliche, hierbei erzeugte Unterabbildungen hinsichtlich der Entnehmbarkeit der ersten codierten Information untersucht werden. Anhand des Zerlegungspfads der Unterabbildung, in der tatsächlich die erste Information codiert ist, kann somit eine zusätzliche Information codiert werden, die bei der Verifikation entnehmbar ist.

Diese kann dann beispielsweise an den Aussteller übermittelt werden und durch diesen zentral eine weitere Ebene der Verifikation bereitgestellt werden, indem der Aussteller anhand der ersten Information überprüft, ob der ermittelte Zerlegungspfad mit der ersten Information über die Streuwertfunktion korrekt verknüpft ist.

Nachfolgend wird die Erfindung unter Bezugnahme auf eine Zeichnung näher erläutert. Hierbei zeigen:
- Fig. 1: schematische Darstellung einer mehrstufigen Wavelet-Zerlegung in zwei Richtungen des Abbildungsraums;
- Fig. 2a bis 2c: eine schematische Darstellung einer Codierung einer Information in eine Abbildung gemäß einer Ausführungsform;
- Fig. 3: eine schematische Darstellung der Zerlegung eines Frequenzband bzw. einer Unterabbildung mit einem zweiten Wavelet;
- Fig. 4: eine schematische Darstellung einer Verifikation einer Abbildung mit einer darin Codierten Information; und
- Fig. 5: eine schematische Darstellung einer Wavelet-Zerlegung zur Codierung einer weiteren verdeckten Information.

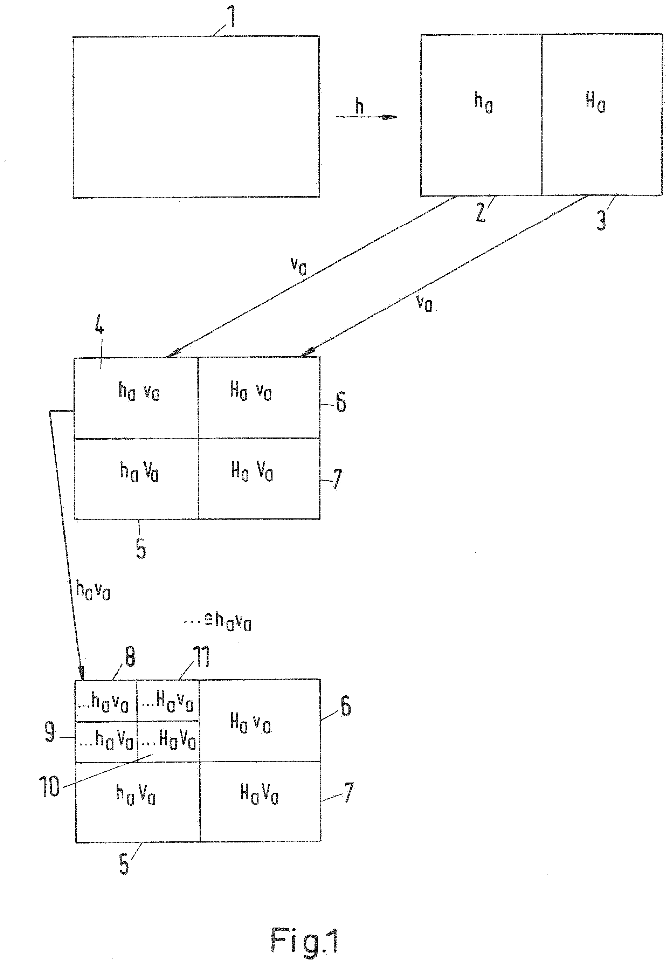

In Fig. 1 ist schematisch eine Wavelet-Zerlegung einer Abbildung 1 dargestellt. Diese Abbildung 1 wird auch als Ursprungsabbildung bezeichnet. Hierbei kann es sich insbesondere um ein Passbild oder Ähnliches handeln, welches personalisierte Informationen enthält.

Bei einer Wavelet-Zerlegung werden Wavelet-Zerlegungstransformationen ausgeführt. Ein sogenanntes Wavelet ist eine Funktion, die einer Wavelettransformation zugrunde liegt. Hierbei wird für jeden Transformationsschritt die Transformationsfunktion aus dem Wavelet über eine Skalierung abgeleitet. Ein Wavelet weist nur in einem begrenzten Bereich des Definitionsbereichs von Null abweichende Funktionswerte auf. Bei einer Anwendung einer Wavelet-Transformation auf eine Abbildung werden Transformationskoeffizienten bestimmt. Die Hälfte kann hierbei einem hochfrequenten Frequenzband und die andere Hälfte einem niederfrequenten Frequenzband zugeordnet werden. Wird die Transformation beispielsweise entlang einer Zeilen-Richtung der in Zeilen und Spalten angeordneten Bildpunkte der Abbildung ausgeführt, so entstehen für jede Bildzeile ein Satz Transformationskoeffizienten, die einem niederfrequenten Frequenzband zugeordnet sind und ein Satz Koeffizienten, die einem hochfrequenten Frequenzband zugeordnet werden. Ohne Information zu verlieren, reicht es aus, für jedes der Frequenzbänder nur so viele Transformationskoeffizienten für eine Weiterbearbeitung und Speicherung der Bildinformation zu verwenden, die der Hälfte der ursprünglichen Bildpunkte der Abbildung entsprechen. Dieses bedeutet, dass die Abbildung bei jeder Wavelet-Transformationszerlegung in zwei gleich große Teile aufgeteilt wird. Diese sich ergebenden Unterabbildungen sind aus den Transformationskoeffizienten abgeleitet. Eine Unterabbildung kann somit dem niederfrequenten Frequenzband die andere dem hochfrequenten Frequenzband zugeordnet werden.

Im Folgenden wir über die Buchstaben "h" für horizontal und "v" für vertikal unterschieden, ob die Wavelet-Transformation entlang einer Abbildungszeile (horizontal) oder entlang einer Abbildungsspalte (vertikal) ausgeführt wird. Neben einer Zerlegung des Abbildungsraums entlang Koordinaten-Achsen, die parallel zu den Zeilen und Spalten orientiert sind, sind auch Zerlegungen entlang von Basisvektoren anderer Koordinatensysteme möglich. Bevorzugt sind die Basisvektoren orthogonal zueinander. Dieses ist aber nicht zwingend erforderlich.

Um die sich ergebenden Frequenzbänder und die zugehörigen Unterabbildungen unterscheiden zu können, wird dem entsprechenden Frequenzband, welches die niederfrequenten Anteile enthält, der Kleinbuchstabe des die Transformationsrichtung angebenden Buchstaben zugeordnet, d.h. "h" oder "v". Dem Frequenzband mit den hochfrequenten Anteilen wird entsprechend der Großbuchstabe, d.h. "H" oder "V", zugeordnet.

Das verwendete Wavelet wird über einen Buchstaben, z.B. "a", "b", "c", ..., tiefergestellter Index angegeben. Ein entlang der Zeilen ausgeführter Wavelet-Zerlegungstransformation-Schritt, der ein Wavelet "a" nutzt, liefert somit zwei Frequenzbänder oder Unterabbildungen 2, 3, die mit den Bezeichnungen "hₐ" 2 und "Hₐ" 3 gekennzeichnet werden. Diese Bezeichnungen werden hier auch als Zerlegungskennzeichnungen bezeichnet. Dieses ist in Fig. 1 angedeutet.

Eine Wavelet-Zerlegung wird sukzessive ausgeführt. Wird diese entlang zweier Raumrichtungen, z.B. den Zeilen und Spalten, der Abbildung ausgeführt, wird als nächstes für die beiden Unterabbildungen 2, 3 jeweils ein Wavelet-Zerlegungstransformations-Schritt entlang der Spalten unter Verwendung des Wavelets "a" ausgeführt. Die sich ergebenden Frequenzbänder bzw. zugehörigen Unterabbildungen 4, 5, 6, 7, werden mit "hₐvₐ" 4, "hₐVₐ" 5, "Hₐvₐ" 6, "HₐVₐ" 7 bezeichnet. Die den zuletzt ausgeführten Transformationsschritt kennzeichnenden Buchstaben "vₐ" oder "Vₐ" werden rechts an die Buchstaben angefügt, die die Zerlegung der Unterabbildung 2, 3 kennzeichnen, an denen die weitere sukzessive Zerlegung vorgenommen ist. Die sich ergebenden Zerlegungskennzeichnungen "hₐvₐ", "hₐVₐ", "Hₐvₐ", "HₐVₐ" geben somit für die jeweilige Unterabbildung einen Zerlegungspfad an, der die Abfolge der Zerlegungsschritte angibt, die ausgehend von der Ursprungsabbildung auszuführen sind, um zu der entsprechenden Unterabbildung 4, 5, 6, 7 zu gelangen.

Die Zerlegung wird fortgesetzt, indem das Frequenzband bzw. die Unterabbildung 4, weiter zerlegt wird, welche für beide Raumrichtungen die niederfrequenten Anteile enthält. Dieses bedeutet, dass die Unterabbildung weiter zerlegt wird, deren Kennzeichnung in der hier verwendeten Notation nur Kleinbuchstaben "h" und "v" enthält. Die übrigen Frequenzbänder und Unterabbildungen 5, 6, 7 werden bei einer klassischen Zerlegung nicht weiter zerlegt.

Eigentlich besteht eine Wavelet-Zerlegung entlang einer Raumrichtung aus dem sukzessiven Ausführen der Zerlegungsschritte entlang der einen Raumrichtung, wobei für jeden Zerlegungsschritt, welches ein Transformationsschritt ist, die zugehörige Transformationsfunktion aus dem ursprünglichen Wavelet über eine Skalierung abgeleitet wird. Da in jedem Schritt eine Unterabbildung in zwei neue Unterabbildungen aufgeteilt oder zerlegt wird, wird hier, sofern sich aus dem Zusammenhang nichts anderes ergibt, unter einer Wavelet-Zerlegungstransformation mit einem bestimmten Wavelet immer ein einzelner Transformationsschritt unter Verwendung einer Transformationsfunktion verstanden, die aus dem bestimmten Wavelet durch entsprechende Skalierung zur Anpassung an eine Größe der zu zerlegenden Unterabbildung abgeleitet ist.

In Fig. 1 ist somit eine Wavelet-Zerlegung der Abbildung in zwei Raumrichtungen der Abbildung schematisch dargestellt, bei der immer abwechselnd eine horizontale und anschließend eine vertikale Wavelet-Zerlegungstransformation ausgeführt sind. Sowohl in horizontaler als auch in vertikaler Richtung sind die Zerlegungen für zwei Stufen gezeigt. Hierbei wird jeweils dasselbe Wavelet "a" verwendet. In der zweiten Zerlegungsstufe wird die Unterabbildung 4 in die Unterabbildungen bzw. Frequenzbänder hₐvₐhₐvₐ 8, hₐvₐhₐvₐ 9, hₐvₐHₐvₐ 11 und hₐvₐHₐVₐ 10 zerlegt. Zur Vereinfachung der Darstellung sind die ersten zwei Zerlegungsschritte hₐvₐ jeweils durch die Auslassungspunkte "..." repräsentiert, d.h. "...≙ hₐvₐ".

Die dargestellte Zerlegung in Unterabbildungen lässt sich rückgängig machen, indem man zugehörige Wavelet-Rücktransformationen oder inverse Transformationen ausführt. Solche Rücktransformationen zu dem Wavelet "a" werden mit "R^{h}ₐ" und "R^{v}ₐ" gekennzeichnet. Der hochgestellt Index "h" oder "v" gibt die Raumrichtung an entlang derer die Rücktransformation ausgeführt wird. Der tiefergestellte Index spezifiziert die inverse Funktion für das Wavelet, dessen Zerlegung durch die Rücktransformation rückgängig gemacht wird. Hierbei werden jeweils die Transformationskoeffizienten der beiden Unterabbildungen, die bei der Zerlegung entstanden sind, verwendet, um eine doppelt so große Unterabbildung bzw. die Abbildung selbst wieder zu erzeugen.

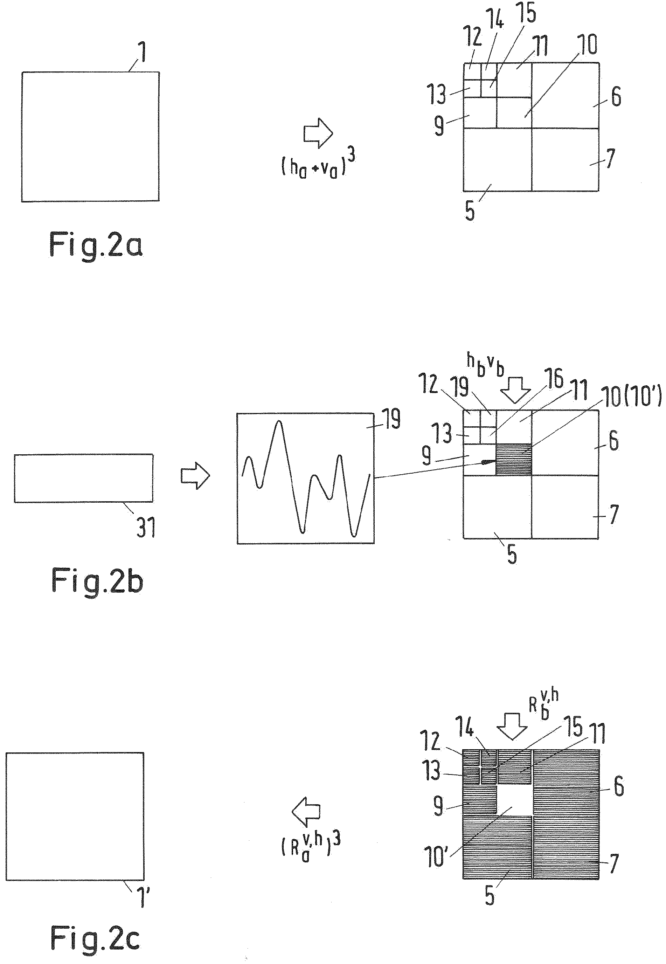

Anhand von Figuren 2a bis 2c soll nun die verdeckte Codierung einer ersten Information in die Ursprungsabbildung 1 erläutert werden Die Information soll aus den Unterabbildungen, die bei einer Wavelet-Zerlegung, wie sie in Fig. 1 dargestellt ist, nicht entnehmbar sein.

Wie in Fig. 2a angedeutet ist, wird die Ursprungsabbildung 1, beispielsweise ein Passbild, sukzessive unter Verwendung eines ersten Wavelets "a" in Unterabbildungen 5, 6, 7, 9, 10, 11,12,13, 14, 15 analog zu der Zerlegung nach Fig. 1 zerlegt. Die Zerlegung erfolgt erneut abwechselnd in horizontaler und vertikaler Richtung. Die Unterabbildung unten rechts 7 lässt sich gemäß der Zerlegung mit "HₐVₐ" kennzeichnen. Die Unterabbildung in der Mitte 10 entsprechend mit "hₐvₐHₐVₐ" usw.

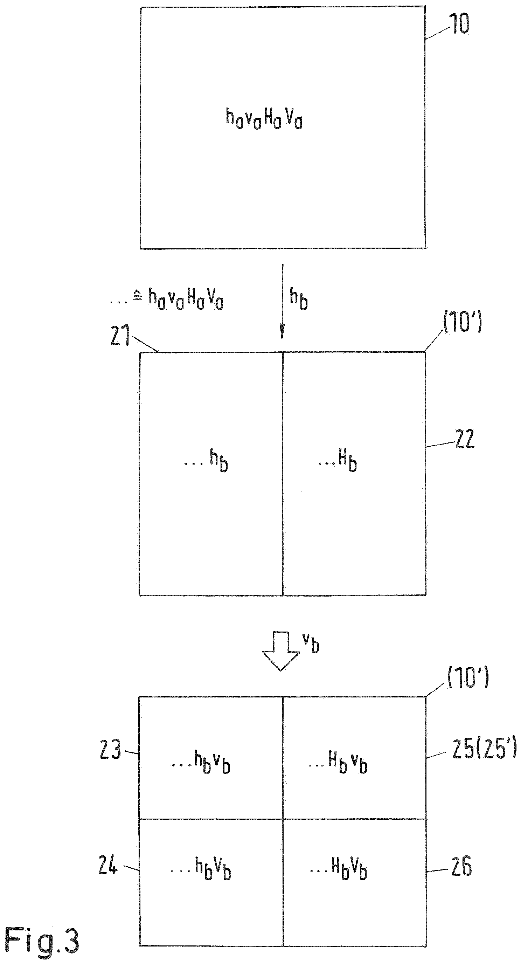

In Fig. 2b ist nun angedeutet, wie die Information eingebettet wird. Hierzu wird eine der Unterabbildungen 5, 6, 7, 9, 10, 11,12,13, 14,15, beispielsweise die Unterabbildung in der Mitte 10 mit der Zerlegungskennzeichnung "hₐvₐHₐVₐ" mittels Wavelet-Zerlegungs-Transformationen unter Verwendung eines zweiten Wavelet "b" 19, welches von dem ersten Wavelet "a" verschieden ist, weiter zerlegt. Beispielsweise wird zunächst eine horizontale Wavelet-Zerlegungstransformation mit dem Wavelet "b" ausgeführt. Wie in Fig. 3 oben dargestellt ist, erhält man zwei Unterabbildungen 21, 22 mit den Zerlegungskennzeichnungen "hₐvₐHₐVₐh_{b}" 21 und "hₐvₐHₐVₐH_{b}" 22. Nach anschließender Ausführung vertikaler Wavelet-Zerlegungs-Transformationen erhält man, wie in Fig. 3 untern dargestellt ist, die vier Unterabbildungen 23, 24, 25, 26 mit den Zerlegungskennzeichnungen "hₐvₐHₐVₐh_{b}v_{b}" 23, "hₐvₐHₐVₐh_{b}V_{b}" 24, "hₐvₐHₐVₐH_{b}v_{b}" 25 und "hₐvₐHₐVₐH_{b}V_{b}" 26, die die Unterabbildung 10 nach Fig. 2a und 2b nach der Zerlegung repräsentieren. Zur Vereinfachung der Darstellung sind die Zerlegungsschritte "hₐvₐHₐVₐ" teilweise durch Auslassungspunkte "..." repräsentiert, d.h. "...≙ hₐvₐHₐV_{a".}

Eine dieser Unterabbildungen, in deren Zerlegungskennzeichnung oder Zerlegungspfad neben Wavelet-Zerlegungstransformationen mit dem ersten Wavelet "a" auch mindestens eine Wavelet-Zerlegungstransformration mit dem zweiten Wavelet "b" auftritt, wird ausgewählt, um in diese die erste Information 31 einzubetten.

Beispielsweise wird in die Unterabbildung 25 mit dem Zerlegungspfad "hₐvₐHₐVₐH_{b}v_{b}" ausgewählt und in diese die erste Information 31 eingebettet. Es entsteht hierdurch die modifizierte Unterabbildung 25'.

Diese Einbettung kann auf unterschiedliche Weise geschehen. Es können nur einzelne Transformationskoeffizienten der Unterabbildung in der Weise verändert werden, dass diese Veränderungen für einen menschlichen Betrachter nicht erkennbar sind oder auch in der Weise eingefügt werden, dass die Information für einen menschlichen Betrachter entnehmbar ist. Dem Fachmann sind Verfahren hierfür bekannt.

Nach dem Einbetten der ersten Information 31, wird aus den Unterabbildungen wieder eine Abbildung 1' erzeugt, die mit der Ursprungsabbildung korrespondiert. Diese enthält dann verdeckt die erste Information. Die Einbettung der ersten Information wird so vorgenommen, dass es für einen menschlichen Betrachter nicht möglich ist, einen Unterschied zu der Ursprungsabbildung 1 zu erkennen. Um diese Abbildung 1' zu erzeugen werden die zu den Zerlegungstransformationen korrespondierenden inversen Transformationen oder Rücktransformationen ausgeführt.

Aus den Unterabbildungen 23, 24, 25', 26 wird zunächst eine Unterabbildung 10', welche mit der Unterabbildung 10 korrespondiert, durch Rücktransformationen erzeugt, die eine inverse Transformationsfunktion für das Wavelet "b" nutzen. Die restlichen Rücktransformationen werden dann mit inversen Transformationsfunktionen zu dem Wavelet "a" ausgeführt. Dieses ist in Fig. 2c angedeutet.

So erhält man die verdeckt codierte Abbildung 1' die mit der ursprünglichen Abbildung 1 nach Fig. 2a korrespondiert. Ohne eine genaue Analyse lässt sich die verdeckt codierte erste Information nicht aus der Abbildung 1' entnehmen. Bei geeigneter Wahl der Informationseinbettung ist der für einen menschlichen Betrachter erfassbare Inhalt der verdeckt codierten Abbildung 1' nach Fig. 2c gleich dem erfassbaren Inhalt der ursprünglichen Abbildung 1 nach Fig. 2a.

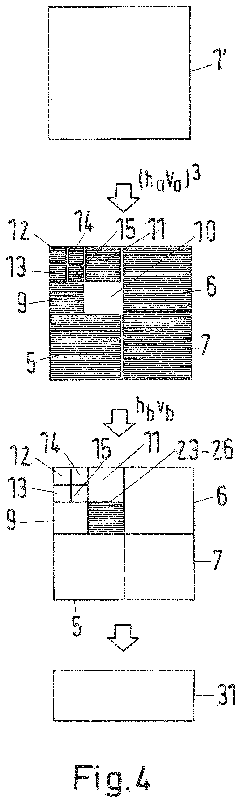

Ohne eine Kenntnis der beiden verwendeten Wavelets, des ersten Wavelets "a" und des zweiten Wavelets "b", ist es nicht möglich, die in der Abbildung 1' gespeicherte erste Information zu extrahieren, d.h. diese erste Information der Abbildung 1' zu entnehmen. Für eine Verifizierung ist es somit notwendig das erste Wavelet "a" und das zweite Wavelet "b" zu kennen. Sind beide bekannt, so wird eine Wavelet-Zerlegung ausgeführt, wie sie im Zusammenhang mit der Codierung für Fig. 2a und 2b beschrieben ist. Wie in Fig. 4 gezeigt ist, wird die Abbildung 1', in der die erste Information verdeckt codiert ist, nach dem optischen Erfassen und Digitalisiere einer mehrschrittigen Wavelet-Zerlegung 101 analog der Zerlegung nach Fig. 2a mit dem ersten Wavelet "a" unterzogen. Die dabei erhaltenen Unterabbildungen 4, 5, 6, 9, 10', 11,12,13, 14,15 sind schematisch dargestellt. Die aufgrund der eingebetteten erste Information modifizierte Unterabbildung 10' wird einer Wavelet-Zerlegung mit dem zweiten Wavelet "b" unterzogen. 102 die Auf diese Weise erhält man die modifizierte Unterabbildung 25', die der zu dem Zerlegungspfad "hₐvₐHₐVₐH_{b}v_{b}" zugehörigen Unterabbildung 25, ergänzt um die eingebettete erste Information, entspricht. Dieser Unterabbildung 25' kann somit die eingebettete Information entnommen werden 103. Hierfür ist es notwendig, eine Kenntnis über die Struktur der ersten Information und eventuell auch die Art und Weise der Einbettung der ersten Information zu besitzen. Ist die erste Information entnehmbar, so wird ein Sicherheitsdokument, in dem die Abbildung 1' gespeichert ist, als echt verifiziert. Hierbei kann die Prüfung auf Entnehmbarkeit der ersten Information auch eine Prüfung des Inhalts der ersten Information umfassen. Beispielsweise kann geprüft werden, ob die erste Information identisch zu einer Information ist, die getrennt von der ersten Abbildung in dem Sicherheitsdokument gespeichert ist, in welchem auch die Abbildung 1' gespeichert ist. Möglich ist es auch den Inhalt gegenüber einer Vorgabe eines Ausstellers des Sicherheitsdokuments zu prüfen. Beispielsweise kann für die erste Information eine Streu- oder Hashwertberechnung mit einer Streuwertfunktion (Hashfunktion) ausgeführt werden und dieser Streuwert beispielsweise mit einem Wert vergleichen werden, der vorfestgelegt ist oder von dem Aussteller des Sicherheitsdokuments abgefragt wird und von diesem für die Überprüfung bereitgestellt wird. Ebenso kann auch die erste Information selbst bei der Prüfung auf Entnehmbarkeit an den Aussteller übermittelt werden und von diesem eine Antwort übermittelt werden, die die Echtheit und/oder Zugehörigkeit der ersten Information zu dem Sicherheitsdokument oder dem Sicherheitselement, welches die Abbildung 1' darstellt, bestätigt. Beispielweise könnte eine Überprüfungsinformation, die eine Verifizierung der ersten Information ermöglicht, in nicht verdeckter Weise in der Abbildung 1' enthalten sein. Die Überprüfungsinformation könnte beispielsweise einen Streuwert (Hashwert) enthalten, der für die erste Information mit einer Streuwertfunktion errechnet werden kann. Da bei geeigneter Wahl der Streuwertfunktion aus dem Streuwert auf die zur Streuwertermittlung verwendete Information nicht zurückgeschlossen werden kann, ist eine solche unverdeckte Angabe nicht nachteilig.

Die hier beschriebenen Möglichkeiten die aufgefundene Information selbst zu verifizieren sind jedoch nur beispielhaft erwähnt.

Neben dem Inhalt der ersten Information können weitere Informationen oder Informationsanteile in der verdeckt codierten Abbildung gespeichert werden.

So stellt die Auswahl der Unterabbildung bzw. des Frequenzbands, in die bzw. in das die erste Information eingebettet wird, eine weitere Information oder einen weiteren Informationsanteil dar.

Die Auswahl ist gleichbedeutend mit der Festlegung der Zerlegungskennung bzw. des Zerlegungspfads für die Erzeugung der Unterabbildung, in die die erste Information codiert wird.

Sind die beiden Wavelets "a" und "b" für die Dekodierung oder Verifikation bekannt, so kann die Zerlegung ausgeführt werden, und dann unterschiedliche mögliche Unterabbildungen, in deren Zerlegungspfad Wavelet-Zerlegungsschritte für beide Wavelets "a" und "b" auftreten, darauf hin untersucht und ausgewertet werden, ob diesen die erste Information zu entnehmen ist. Ist die erste Information einer der Unterabbildungen entnehmbar, so ist auch zugleich die über die Auswahl der Unterabbildung gespeicherte Information ermittelt.

Ein speicherbarer Informationsgehalt für diese weitere gespeicherte Information kann gesteigert werden, indem neben dem oben beschriebenen Zerlegungsschema nach Fig. 2a und 2b auch alternative Zerlegungsschemata zugelassen werden, d.h. möglicherweise für die Codierung verwendet werden. So kann anstelle der Unterabbildung 10 der Wavelet-Zerlegung mit dem ersten Wavelet "a" eine andere Unterabbildung, beispielsweise Unterabbildung 9, mit dem Zerlegungsschema "hₐvₐhₐVₐ" für die weitere Zerlegung mit dem zweiten Wavelet "b" ausgewählt werden.

Auch die Zerlegungsstufe im Hinblick auf die Wavelet-Zerlegung mit dem ersten Wavelet "a", d.h. der Anzahl der bereits mit dem ersten Wavelet ausgeführten Wavelet-Zerlegungsschritte entlang einer Raumrichtung der Abbildung kann variiert werden.

Ebenso kann die Zerlegungsstufe, die anschließend für eine Zerlegung mit dem zweiten Wavelet "b" gewählt wird variiert werden.

Auch ist es möglich nach dem Ausführen mindestens eines Zerlegungsschritts mit dem zweiten Wavelet "b" weitere Zerlegungsschritte mit dem ersten Wavelet "a" auszuführen.

Ferner ist es möglich ein "grundsätzlich" anderes Zerlegungsschema für die Wavelet-Zerlegung zu wählen Beispielsweise eine Reihenfolg der Zerlegung entlang der Raumrichtungen zu variieren etc.

Eine noch größere Variabilität erhält man, wenn man das zweite Wavelet aus einer Gruppe von zu dem ersten Wavelet "a" verschiedenen Wavelets "b", "c", "d", ... auswählt. Ebenso ist es möglich auch beide verwendeten Wavelets aus einer Gruppe von verschiedenen Wavelets "a", "b", "c", "d", ... auszuwählen.

Es ergibt sich, dass mit der Steigerung der möglichen Zerlegungsschemata auch der über die Auswahl des Zerlegungsschemas codierbare Inhalt zunimmt.

Eine Verifikation der verdeckt codierten Abbildung ohne präzise Vorgaben wird deutlich erschwert oder unmöglich. Eine Verifikation und Entnahme der gespeicherten ersten Information ist somit nur für denjenigen möglich, dem die genaue Codierung bekannt ist. Nur wem neben den Wavelets angegeben wird, in welcher Reihenfolge Zerlegungsschritte auszuführen sind, kann die erste Information ohne großen Rechenaufwand aus der verdeckt codierten Abbildung entnehmen. Ohne Kenntnis der Wavelets ist dieses gänzlich unmöglich.

In der Regel ist es ohne diese Kenntnis nicht einmal möglich festzustellen, ob überhaupt eine erste Information in der Abbildung codiert ist.

Andernfalls müssen mehrere Wavelet-Zerlegungen ausgeführt werden und unterschiedliche sich ergebende Unterabbildungen hinsichtlich der Entnehmbarkeit der ersten Information ausgewertet werden.

In einer Weiterbildung wird neben der ersten Information und zusätzlich zu der Information, die in der Auswahl des Zerlegungspfads der Unterabbildung gespeichert ist, in welche die erste Information eingebettet ist, noch eine hier zusätzliche Information, die hier als vierte Information bezeichnet wird, gespeichert, die analog der ersten Information, jedoch unter Verwendung des ersten Wavelets "a" und eines dritten Wavelets "c" codiert wird. Hierbei werden die Unterabbildungen, d.h. die Frequenzbänder, in die die erste und die vierte Information eingefügt werden, so gewählt, dass diese jeweils nicht in dem Zerlegungspfad der anderen Unterabbildung auftreten. Diese bedeutet, keine der beiden Unterabbildungen geht aus der Zerlegung der anderen Unterabbildung hervor. Vorzugsweise tritt in dem Zerlegungspfad der Unterabbildung, in die die erste Information gespeichert wird, kein Zerlegungsschritt mit dem dritten Wavelet "c" auf, und in dem Zerlegungspfad der Unterabbildung, in die die vierte Information gespeichert wird, kein Zerlegungsschritt mit dem zweiten Wavelet "b" auf. Die identischen Zerlegungspfadanteile sind somit Zerlegungsschritte, welche mit dem ersten Wavelet "a" ausgeführt sind. In diesem Fall werden die Zerlegungspfade als unabhängig voneinander bezeichnet. Bei dieser Ausführungsform können in der einen Abbildung zwei Informationen, die erste Information und die vierte Information, unabhängig voneinander gespeichert werden. Eine Verifikation oder Entnahme der ersten Information ist bei Kenntnis des ersten Wavelets "a" und des zweiten Wavelets "b" möglich. Eine Verifikation oder Entnahme der vierten Information ist bei Kenntnis des ersten Wavelets "a" und des dritten Wavelets "c" möglich.

Das erste und zweite Wavelet "a" und "b" können beispielsweise einem größeren Kreis von Personen oder Institutionen für eine Verifizierung der Abbildung 1' zugänglich gemacht werden. Das erste und das dritte Wavelet "a" und "c" können einer anderen Gruppe alternativ oder einer Auswahl der ersten Gruppe zusätzlich bekannt gemacht werden, um eine alternative oder zweite Verifikation zu ermöglichen. Auch hier können das zweite und dritte Wavelet oder alle drei Wavelets aus einer Gruppe verschiedener Wavelets ausgewählt sein und für unterschiedliche Abbildungen, d.h. unterschiedliche Sicherheitselemente und damit gesicherte Sicherheitsdokumente unterschiedliche Wavelets und/oder Zerlegungspfade für die zur Einbettung der Informationen genutzten Frequenzbänder oder Unterabbildungen verwendet werden.

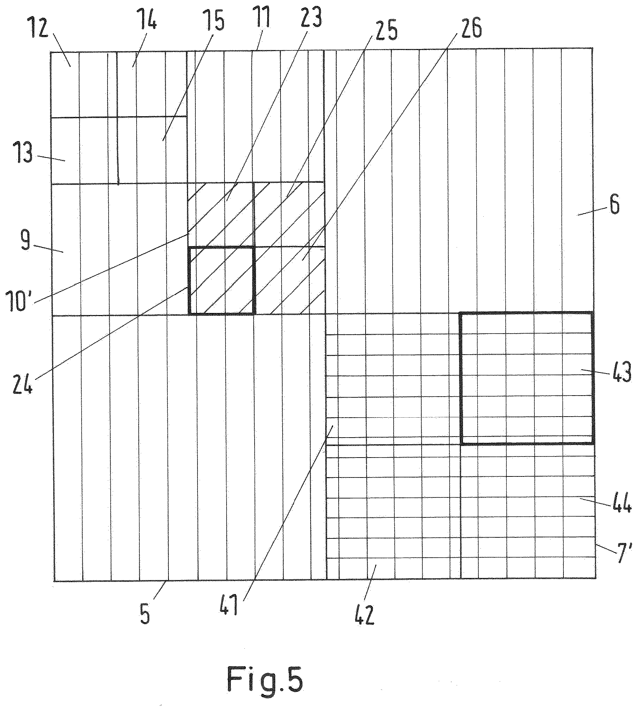

In Fig. 5 ist eine Zerlegung angedeutet, bei Frequenzbänder oder Unterabbildungen, die aus Zerlegungen mit dem ersten Wavelet "a" stammen eine vertikale Schraffur aufweisen. Eine zusätzliche Zerlegung mit dem zweiten Wavelet "b" ist über eine diagonale Schraffur angedeutet. Eine Zerlegung mit dem dritten Wavelet "c" mit einer horizontalen Schraffur. Die für die Informationseinbettung verwendeten Unterabbildungen sind durch eine dicke Umrandung hervorgehoben. Analog dem oben im Zusammenhang mit Fig. 2a und 2b beschriebenen Zerlegungsschema ergeben sich die Zerlegungspfade zu "hₐvₐHₐVₐh_{b}V_{b}" 24, "HₐVₐH_{c}v_{c}" 43.

Weitere Modifikationen sind möglich, indem weitere Wavelets eingesetzt werden, d.h. das in dem Pfad, der für die Informationseinbettung gewählten Unterabbildung drei Wavelets oder mehr auftreten usw.

Es versteht sich, dass nur beispielhafte Ausführungsformen beschrieben sind. Die in den einzelnen Beispielen beschriebenen Merkmale können nur innerhalb des Umfangs der beigefügten Ansprüche miteinander kombiniert werden, um weitere Ausführungsformen zu bilden.

Angemerkt wird noch einmal, dass ein Sicherheitselement jeweils ein körperlicher Gegenstand ist, in dem die codierte Abbildung für eine bildliche Erfassung gespeichert und eingebettet ist.

## Patentansprüche

1. Verfahren zum Erzeugen eines Sicherheitselements mit versteckt codierter Information in einer abbildend erfassbaren grafischen Abbildung (1'), wobei das Sicherheitselement eine körperliche Einheit eines Sicherheitsdokuments oder ein körperlicher Gegenstand für das Sicherheitsdokument ist, umfassend die Schritte:
Bereitstellen einer grafischen zweidimensionalen Abbildung (1);
Bereitstellen einer zu codierenden ersten Information (31);
Ausführen von Wavelet-Zerlegungstransformationen, um die Abbildung sukzessive in mit Frequenzbändern korrespondierende Unterabbildungen (2- 15, 21-25,41-44) zu zerlegen,
wobei die Unterabbildungen aus den Transformationskoeffizienten abgeleitet werden;
Verändern einzelner Transformationskoeffizienten einer ausgewählten der Unterabbildungen (25), um die zu codierende erste Information in die ausgewählte Unterabbildung (25) einzufügen;
Ausführen von Wavelet-Rücktransformationen, um eine mit der bereitgestellten grafischen Abbildung (1) korrespondierende codierte Abbildung (1') zu erhalten, in der die erste Information (31) verdeckt gespeichert ist,
Ausbilden einer abbildend erfassbaren Repräsentation der codierten Abbildung (1'), wobei
beim sukzessiven Ausführen der Wavelet-Zerlegungstransformationen, die zum Erzeugen der einen Unterabbildung (2- 15, 21-25,41-44), in die die erste Information (31) eingefügt wird, neben Wavelet-Zerlegungstransformationen mit einem ersten Wavelet (a) mindestens eine Wavelet-Zerlegungstransformation mit einem von dem ersten Wavelet verschiedenen zweiten Wavelet (b) ausgeführt wird,
**dadurch gekennzeichnet, dass**
eine zweite Information über die Auswahl der ausgewählten Unterabbildung (25) zum Einfügen der ersten Information aus der Gruppe der über die sukzessive Wavelet-Zerlegungstransformationen erzeugbaren oder erzeugten Unterabbildungen (2- 15, 21-25) codiert wird.

2. Verfahren nach Anspruch 1, **dadurch gekennzeichnet, dass** die Auswahl der ausgewählten Unterabbildung (25) aus einer Auswahl von Zerlegungsschemata erfolgt, die Zerlegungstransformationen zur Erzeugung der einen Unterabbildung verwendet werden.

3. Verfahren nach einem der Ansprüche 1 oder 2, **dadurch gekennzeichnet, dass** bei einer Wavelet-Zerlegungstransformation jeweils eine zu einem hochfrequenten Frequenzband korrespondierende Unterabbildung und eine zu einem niederfrequenten Frequenzband korrespondierende Unterabbildung erzeugt werden und beim Erzeugen der ausgewählten Unterabbildung (2- 15, 21-25,41-44) mindestens eine der sukzessive ausgeführten Wavelet-Zerlegungstransformationen an einer Unterabbildung ausgeführt wird, die mit dem hochfrequenten Frequenzband der zuvor ausgeführten Wavelet Zerlegungstransformation korrespondiert.

4. Verfahren nach einem der Ansprüche 1 bis 3, **dadurch gekennzeichnet, dass** bei der sukzessiven Zerlegung der Abbildung (1) in die ausgewählte Unterabbildung (2- 15, 21-25,41-44) mindestens eine Unterabbildung (10) mittels einer Wavelet-Zerlegungstransformation unter Verwendung des zweiten Wavelets (b) zerlegt wird, an der bei einer in zwei Richtungen des Abbildungsraums ausgeführten Wavelet-Zerlegung unter jeweiliger Verwendung des ersten Wavelets (a) keine weitere Zerlegung vorgenommen würde.

5. Verfahren nach einem der Ansprüche 1 bis 4, **dadurch gekennzeichnet, dass** die codierte erste Information so ausgewählt wird, dass diese dem Frequenzband, in dessen Unterabbildung diese zugefügt wird, keine spektrale Energie zufügt.

6. Verfahren nach einem der Ansprüche 1 bis 5, dass zusätzlich zu dem ersten Wavelet (a), mehrere hiervor verschiedene Wavelets (a,b,c,...) bereitgestellt werden und das zweite Wavelet (b) aus der Gruppe der verschiedenen Wavelets (a,b,c,...) ausgewählt wird.

7. Sicherheitselement mit einer verdeckt codierten ersten Information (31), wobei das Sicherheitselement eine körperliche Einheit eines Sicherheitsdokuments oder ein körperlicher Gegenstand für das Sicherheitsdokument ist, umfassend eine abbildend erfassbare Abbildung (1'), in welche die erste Information (31) durch das Verfahren nach Anspruch 1 codiert ist.

8. Verifikationsverfahren für ein Sicherheitselement mit einer Abbildung auf eine Entnehmbarkeit einer in der Abbildung verdeckt codierten ersten Information, wobei das Sicherheitselement eine körperliche Einheit eines Sicherheitsdokuments oder ein körperlicher Gegenstand für das Sicherheitsdokument ist, umfassend die Schritte:
Bereitstellen der Abbildung (1'),
Bereitstellen eines ersten Wavelets (a),
Ausführen von Wavelet-Zerlegungstransformationen zum sukzessiven Erzeugen von zu Frequenzbändern korrespondierenden Unterabbildungen (2- 15, 21-25,41-44),
Auswerten mindestens einer Unterabbildung (25) darauf hin, ob dieser eine erste codierte Information (31) zu entnehmen ist, und Ausgeben einer Verifikationsentscheidung abhängig davon, ob die erste codierte Information (31) zu entnehmen ist oder nicht,
wobei
zusätzlich ein zweites Wavelet (b) bereitgestellt wird und mindestens eine Wavelet-Zerlegungstransformation zum Erzeugen der Unterabbildung (25) für die Auswertung auf die Entnehmbarkeit der ersten codierten Information mit dem zweiten Wavelet (b) ausgeführt wird,
**dadurch gekennzeichnet, dass**
mehrere bei der Zerlegung der Abbildung erzeugte Unterabbildungen (2- 15, 21-25,41-44) auf die Entnehmbarkeit der ersten codierten Information ausgewertet werden, und eine zweite Information aus der Identifikation der Unterabbildung abgeleitet und ausgegeben wird, für die die Entnehmbarkeit der ersten codierten Information festgestellt wird.

9. Verifikationsverfahren nach Anspruch 8, **dadurch gekennzeichnet, dass** die Abbildung (1') nach unterschiedlichen Zerlegungsschemata mittels der Wavelet-Zerlegungstransformationen zerlegt wird, und eine weitere Information daraus abgeleitet und ausgegeben wird, bei welchem Zerlegungsschema in einer der erzeugten Unterabbildungen die erste Information entnehmbar ist.

10. Verifikationsverfahren nach einem der Ansprüche 8 oder 9, **dadurch gekennzeichnet, dass** das Bereitstellen der Abbildung ein abbildendes Erfassen einer bildlichen Darstellung der Abbildung umfasst.

## Claims

1. A method for generating a security element with hidden encoded information in an imageable graphic image (1'), the security element being a physical entity of a security document or a physical object for the security document, comprising the steps of:
providing a graphical two-dimensional image (1);
providing first information (31) to be encoded;
performing wavelet decomposition transforms to successively decompose the image into sub-images (2- 15, 21-25, 41-44) corresponding to frequency bands, the sub-images being derived from the transform coefficients;
changing individual transform coefficients of a selected one of the sub-images (25) to insert the first information to be encoded into the selected sub-image (25);
performing wavelet reverse transformations to obtain a coded image (1') corresponding to the provided graphical image (1) in which the first information (31) is covertly stored, forming an imageable representation of the coded image (1'), wherein in successively performing the wavelet decomposition transformations necessary to generate the one sub-image (2- 15, 21-25, 41-44) in which the first information (31) is inserted in addition to wavelet decomposition transformations with a first wavelet (a), at least one wavelet decomposition transformation is carried out with a second wavelet (b) different from the first wavelet,
**characterized in that**
second information is encoded via the selection of the selected sub-image (25) for insertion of the first information from the group of sub-images (2- 15, 21-25) which can be generated or are generated via the successive wavelet decomposition transformations.

2. The method of claim 1, **characterized in that** the selection of the selected sub-image (25) comprises selecting one decomposition scheme from a plurality of decomposition schemes used for wavelet decomposition transforms to generate the one sub-image.

3. The method according to any one of claims 1 or 2, **characterized in that** in a wavelet decomposition transformation, one sub-image corresponding to a high frequency band and one sub-image corresponding to a low frequency band are respectively generated, and in generating the selected sub-image (2- 15, 21-25,41-44), at least one of the successively executed wavelet decomposition transformations is executed on a sub-image corresponding to the high frequency band of the previously executed wavelet decomposition transformation.

4. The Method according to any one of claims 1 to 3, **characterized in that** during the successive decomposition of the image (1) into the selected sub-image (2- 15, 21-25, 41-44) at least one sub-image (10), at which no further decomposition would be performed in the case of a wavelet decomposition executed in two directions of the imaging space using the first wavelet (a) in each case, is decomposed by means of a wavelet decomposition transformation using the second wavelet (b).

5. The method according to any one of claims 1 to 4, **characterized in that** the encoded first information is selected in such a way that it does not add spectral energy to the frequency band in the sub-image of which it is added.

6. The method according to any one of claims 1 to 5, in that, in addition to the first wavelet (a), a plurality of wavelets (a,b,c,...) different herefrom are provided and the second wavelet (b) is selected from the group of different wavelets (a,b,c,...).

7. Security element having a covertly encoded first information (31), wherein the security element is a physical entity of a security document or a physical object for the security document, comprising an imageable image (1') in which the first information (31) is encoded by the method according to claim 1.

8. A verification method for a security element with an image on extractability of a first information covertly encoded in the image, wherein the security element is a physical entity of a security document or a physical object for the security document, comprising the steps of:
providing the image (1'),
providing a first wavelet (a),
performing wavelet decomposition transformations for successively generating sub-images (2- 15, 21-25, 41-44) corresponding to frequency bands,
evaluating at least one sub-image (25) as to whether a first encoded information (31) can be extracted therefrom, and outputting a verification decision depending on whether the first encoded information (31) can be extracted or not,
wherein additionally a second wavelet (b) is provided and at least one wavelet decomposition transformation for generating the sub-image (25) for the evaluation on the extractability of the first encoded information is executed with the second wavelet (b),
**characterized in in that**
a plurality of sub-images (2- 15, 21-25, 41-44) generated during the decomposition of the image are evaluated for the extractability of the first encoded information, and a second information is derived and output from the identification of the sub-image for which the extractability of the first encoded information is determined.

9. A verification method according to claim 8, **characterized in that** the image (1') is decomposed according to different decomposition schemes by means of the wavelet decomposition transforms, and further information, for which decomposition scheme in one of the generated sub-images the first information is extractable, is derived therefrom and output.

10. A verification method according to any one of claims 8 or 9, **characterized in that** providing the image comprises imagewise capturing an image representation of the image.

## Revendications

1. Procédé pour générer un élément de sécurité comprenant une information codée dissimulée dans une illustration (1') graphique illustrative pouvant être capturée, l'élément de sécurité étant une unité physique d'un document de sécurité ou un objet physique pour le document de sécurité, comprenant les étapes suivantes :
fourniture d'une illustration bidimensionnelle graphique (1) ;
fourniture d'une première information (31) à coder ;
exécution de transformations de décomposition en ondelettes afin de décomposer l'illustration successivement en sous-illustrations (2-15, 21-25, 41-44) correspondant à des bandes de fréquences, les sous-illustrations étant dérivées des coefficients de transformation ;
modification des coefficients de transformation individuels d'une sous-illustration choisie (25) parmi les sous-illustrations afin d'insérer la première information à coder dans la sous-illustration choisie (25) ;
exécution d'une transformation inverse en ondelettes afin d'obtenir une illustration codée (1') correspondant à l'illustration graphique (1) fournie, dans laquelle la première information (31) est enregistrée dissimulée ;
formation d'une représentation illustrative pouvant être capturée de l'illustration codée (1'),
lors de l'exécution successive des transformations de décomposition en ondelettes, celle destinée à générer ladite sous-illustration (2-15, 21-25, 41-44) dans laquelle est insérée la première information (31), outre des transformations de décomposition en ondelettes avec une première ondelette (a), au moins une transformation de décomposition en ondelettes étant exécutée avec une deuxième ondelette (b) différente de la première ondelette,
**caractérisé en ce que**
une deuxième information à propos de la sélection de la sous-illustration choisie (25) destinée à l'insertion de la première information est codée à partir du groupe des sous-illustrations (2-15, 21-25) pouvant être générées ou générées par le biais des transformations de décomposition en ondelettes successives.

2. Procédé selon la revendication 1, **caractérisé en ce que** la sélection de la sous-illustration choisie (25) s'effectue à partir d'une sélection de schémas de décomposition qui sont utilisés pour les transformations de décomposition en ondelettes en vue de générer ladite sous-illustration.

3. Procédé selon l'une des revendications 1 et 2, **caractérisé en ce que** lors d'une transformation de décomposition en ondelettes, sont respectivement générées une sous-illustration correspondant à une bande de fréquences de hautes fréquences et une sous-illustration correspondant à une bande de fréquences de basses fréquences et, lors de la génération de la sous-illustration choisie (2-15, 21-25, 41-44), au moins l'une des transformations de décomposition en ondelettes exécutées successivement est exécutée sur une sous-illustration qui correspond à la bande de fréquences de hautes fréquences de la transformation de décomposition en ondelettes exécutée précédemment.

4. Procédé selon l'une des revendications 1 à 3, **caractérisé en ce que** lors de la décomposition successive de l'illustration (1) en la sous-illustration choisie (2-15, 21-25, 41-44), au moins une sous-illustration (10) est décomposée au moyen d'une transformation de décomposition en ondelettes en utilisant la deuxième ondelette (b), sur laquelle aucune décomposition supplémentaire n'a été effectuée lors d'une transformation de décomposition en ondelettes exécutée dans deux directions de l'espace d'illustration en utilisant respectivement la première ondelette (a).

5. Procédé selon l'une des revendications 1 à 4, **caractérisé en ce que** la première information codée est sélectionnée de telle sorte que celle-ci n'ajoute aucune énergie spectrale à la bande de fréquences dans la sous-illustration de laquelle elle est ajoutée.

6. Procédé selon l'une des revendications 1 à 5, **caractérisé en ce qu'**en plus de la première ondelette (a), plusieurs ondelettes (a, b, c, ...) différentes de celle-ci sont fournies et la deuxième ondelette (b) est choisie dans le groupe des différentes ondelettes (a, b, c, ...).

7. Élément de sécurité comprenant une première information (31) codée dissimulée, l'élément de sécurité étant une unité physique d'un document de sécurité ou un objet physique pour le document de sécurité, comprenant une illustration (1') illustrative pouvant être capturée, dans laquelle la première information (31) est codée par le procédé selon la revendication 1.

8. Procédé de vérification pour un élément de sécurité en vue d'une possibilité d'extraction d'une première information codée dissimulée dans l'illustration, l'élément de sécurité étant une unité physique d'un document de sécurité ou un objet physique pour le document de sécurité, comprenant les étapes suivantes :
fourniture de l'illustration (1'),
fourniture d'une première ondelette (a),
exécution de transformations de décomposition en ondelettes afin de générer successivement des sous-illustrations (2-15, 21-25, 41-44) correspondant à des bandes de fréquences,
interprétation d'au moins une sous-illustration (25) afin de déterminer si une première information (31) codée peut en être extraite, et émission d'une décision de vérification suivant que la première information (31) codée peut être extraite ou non,
une deuxième ondelette (b) étant en plus fournie et au moins une transformation de décomposition en ondelettes étant exécutée avec la deuxième ondelette (b) en vue de générer la sous-illustration (25) pour l'interprétation visant à déterminer la possibilité d'extraction de la première information codée,
**caractérisé en ce que**
plusieurs sous-illustrations (2-15, 21-25, 41-44) générées lors de la décomposition de l'illustration sont interprétées en vue de déterminer la possibilité d'extraction de la première information codée, et une deuxième information, pour laquelle la possibilité d'extraction de la première information codée est constatée, est dérivée de l'identification de la sous-illustration puis émise.

9. Procédé de vérification selon la revendication 8, **caractérisé en ce que** l'illustration (1') est décomposée selon différents schémas de décomposition au moyen des transformations de décomposition en ondelettes, et une information supplémentaire en est dérivée et émise, schémas de décomposition avec lesquels la première information peut être extraite dans l'une des sous-illustrations générées.

10. Procédé de vérification selon l'une des revendications 8 et 9, **caractérisé en ce que** la fourniture de l'illustration comprend une capture illustrative d'une représentation imagée de l'illustration.
